Europäisches Patentamt

**European Patent Office**

Office européen des brevets

(19)

(11) Numéro de publication : **0 020 226**
**B1**

(12)

# FASCICULE DE BREVET EUROPÉEN

(45) Date de publication du fascicule du brevet :
**26.01.83**

(51) Int. Cl.³ : **F 42 B 13/50**, F 42 B 25/16,
B 64 D 1/04

(21) Numéro de dépôt : **80400671.6**

(22) Date de dépôt : **14.05.80**

(54) **Dispositif de transport et de largage d'une pluralité de charges contenues dans un conteneur.**

(30) Priorité : **23.05.79 FR 7913201**

(43) Date de publication de la demande :
**10.12.80 Bulletin 80/25**

(45) Mention de la délivrance du brevet :
**26.01.83 Bulletin 83/04**

(84) Etats contractants désignés :
**AT BE CH DE GB IT LI LU NL SE**

(56) Documents cités :
**FR A 1 579 025**
**FR A 2 075 665**
**FR A 2 085 364**
**FR A 2 336 656**
**US A 2 956 964**
**US A 3 451 306**
**US A 3 872 770**
**US A 3 948 175**

(73) Titulaire : **THOMSON-BRANDT**
**173, Boulevard Haussmann**
**F-75379 Paris Cedex 08 (FR)**

(72) Inventeur : **Crepin, Roger**
**"THOMSON-CSF" SCPI-173, bld Haussmann**
**F-75360 Paris Cedex 08 (FR)**

(74) Mandataire : **Dubreuil, Annie et al**
**THOMSON-CSF SCPI 173, Bld Haussmann**
**F-75379 Paris Cedex 08 (FR)**

Jouve, 18, rue St-Denis, 75001 Paris, France

Dispositif de transport et de largage d'une pluralité de charges contenues dans un conteneur

La présente invention concerne un dispositif de transport et de largage d'une pluralité de charges contenues dans un conteneur unique suspendu à un aéronef.

Les charges considérées ici peuvent être de natures extrêmement variées. Il peut s'agir, notamment, de vivres ou de matériel médical, mais aussi de charges militaires explosives destinées à neutraliser des objectifs au sol, relativement étendus ou dispersés. Ce résultat est obtenu, généralement, au moyen de deux familles d'armes, l'une consistant à répandre un nombre important de sous-projectiles autonomes, l'autre à produire un grand nombre d'éclats destructeurs.

Si l'on peut agencer une pluralité de modules unitaires ayant un corps fragmentable à l'intérieur d'une bombe dite modulaire et doter cet agencement de moyens assurant l'éjection séquentielle de ces modules unitaires à des instants déterminés, on obtient les avantages conjugués de ces deux familles d'armes.

On connaît déjà des projectiles contenant une pluralité de sous-projectiles qui peuvent être éjectés séquentiellement au cours de la trajectoire de descente des projectiles.

Il a déjà été proposé et décrit, notamment, dans US-A-3,948,175 (BUCKLISCH) un dispositif de transport et de largage d'une pluralité de charges contenues dans un conteneur se présentant sous la forme d'une bombe empennée ; ces charges étant équipées d'un parachute de retardement sont extraites séquentiellement par l'arrière du conteneur.

Dans tous les cas, mais plus particulièrement lorsqu'il s'agit de charges militaires explosives, il ne faut en aucun cas que des actions puissent être menées (par exemple : mise à feu de moyens pyrotechniques) au niveau des modules élémentaires, tant que le conteneur de transport n'est pas désolidarisé, de façon effective, du véhicule porteur, c'est-à-dire avant que le largage de ce conteneur ait réellement lieu.

La présente invention se propose de résoudre ces problèmes ; elle concerne un dispositif de transport et de largage d'une pluralité de charges disposées en série dans un conteneur, tel qu'une bombe, suspendu à un véhicule porteur, du type aéronef, ce conteneur comprenant essentiellement une virole centrale munie d'anneaux d'accrochage aux crochets correspondant fixés sur le véhicule, une partie avant ogivale et une partie arrière empennée. Selon l'invention, les charges sont équipées de moyens d'extraction comprenant : un parachute à grande voilure maintenu plié par une drisse sectionnable et un parachute extracteur, et, ce dispositif comporte des moyens de commande et des moyens de sécurité de largage comprenant une poutre rigide solidaire de la virole centrale du conteneur, cette poutre étant munie d'anneaux d'accrochage aux crochets du véhicule, des verrous d'immobilisation des charges dans la virole et d'un moyen de déverrouillage d'une barre coulissante permettant de libérer les verrous d'immobilisation des charges et conjointement une éolienne disposée sur la partie avant ogivale du conteneur pour fournir l'énergie électrique nécessaire au fonctionnement de ces moyens de commande et de sécurité de largage.

L'invention sera mieux comprise à l'aide des explications qui vont suivre et des figures jointes parmi lesquelles :

la figure 1 représente une vue extérieure des parties visibles, avant l'utilisation, d'un conteneur conforme à l'invention ;

la figure 2 montre la disposition des modules à l'intérieur du conteneur ;

les figures 3, 4 et 5 représentent schématiquement, plus en détail, chacun des éléments représentés assemblés dans la figure 2 ;

la figure 6 est un schéma illustrant les différentes séquences du largage d'un dispositif conforme à l'invention ;

la figure 7 représente schématiquement un moyen de réalisation assurant le bon déroulement des phases de largage décrites au moyen de la figure précédente.

Pour plus de clarté, les mêmes éléments portent les mêmes références dans toutes les figures.

L'exemple décrit se rapporte à une bombe modulaire, mais comme cela a été dit précédemment il pourrait s'agir d'un conteneur présentant d'ailleurs le même profil extérieur qu'une bombe, dans lequel serait agencée une pluralité de modules contenant eux-mêmes toute sorte de charges, telles que vivres ou matériels divers.

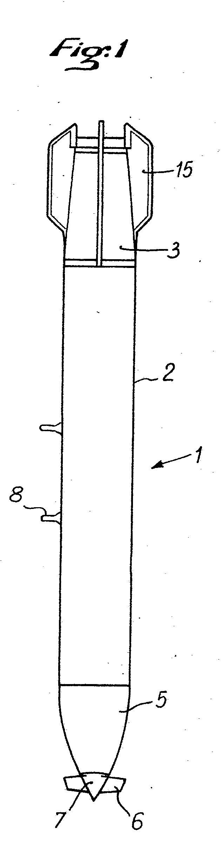

Comme le montre la figure 1, une bombe 1 conforme à l'invention, vue de l'extérieur, avant son largage comporte essentiellement une virole 2 destinée à contenir une pluralité de modules agencés longitudinalement dans celle-ci, une partie arrière 3, porte empennage 15, solidaire du module arrière dans l'exemple décrit comme cela sera expliqué ultérieurement ou solidaire de la virole et une pointe avant 5 en forme d'ogive, enfin une éolienne 6 comportant un cône porte-pales 7, destinée, lorsqu'elle tourne, à fournir l'énergie à un générateur électrique (non représenté) fournissant le courant aux dispositifs de commande électrique et électronique. Un système d'attache 8 assure l'accrochage de la bombe 1 à l'appareil qui doit la transporter.

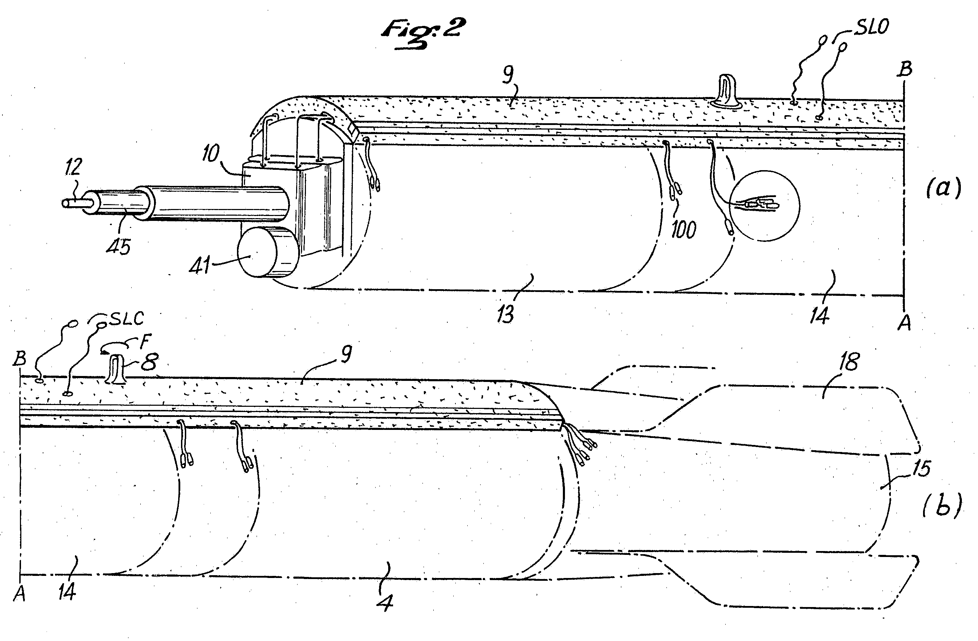

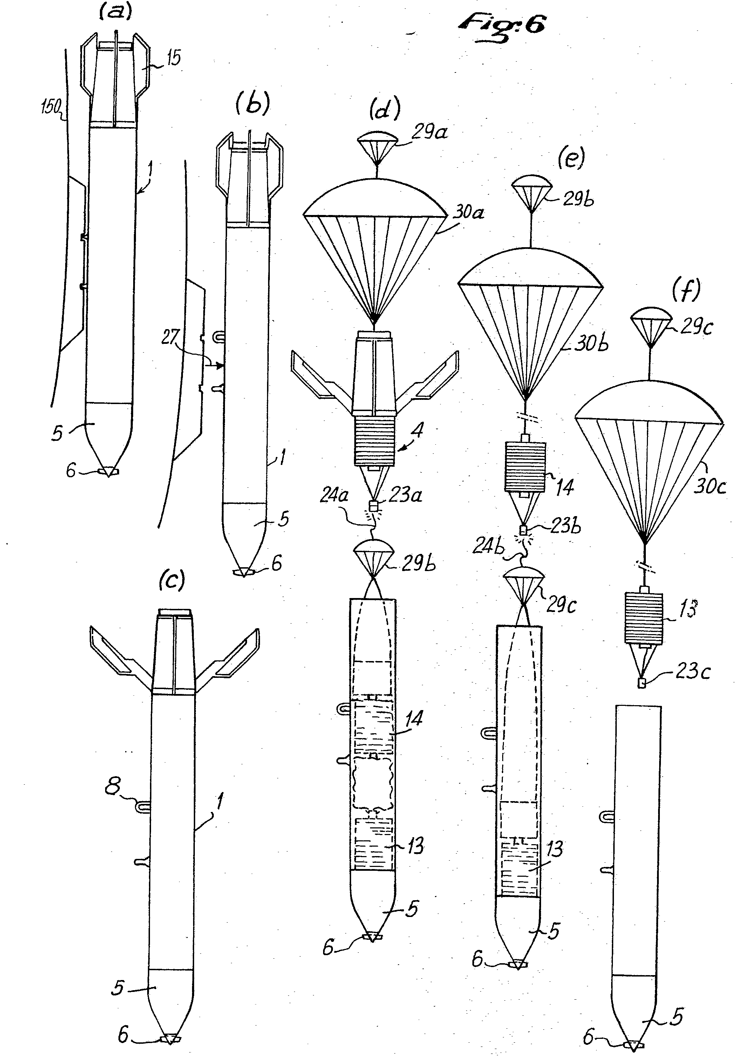

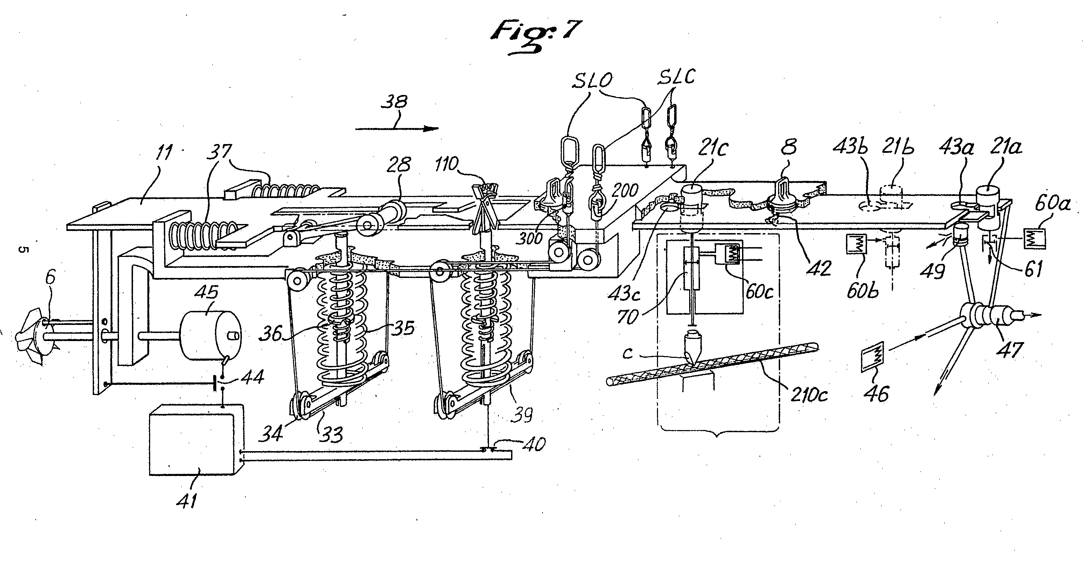

Comme le montrent les figures 2 à 5, la partie supérieure de la bombe 1 comporte sur toute la longueur cylindrique de sa virole 2 (non visible sur ces figures), une poutre métallique 9 dont la section a, par exemple, la forme d'un croissant aux pointes tronquées. La bombe sur la figure 2 est représentée en deux parties coupées selon une section AB (la figure 2a représentant l'avant et la figure 2b représentant l'arrière). Cette poutre 9 accomplit plusieurs fonctions, notamment : celles d'encaisser et de répartir sur l'ensemble les efforts dus à l'emport ; de porter les moyens d'attache tels que 8 de la bombe à son porteur (moyens capables, au moins pour l'un d'entre eux, de tourner, comme le montre la flèche F) ; de maintenir par l'intermédiaire de verrous, les modules jusqu'à leur largage et d'assurer le guidage en roulis de ces derniers pendant leur largage. Les fils de sécurité largables SLO et SLC et leurs poulies ainsi que les fils de câblage électrique d'alimentation des modules (référencés 100 de manière générale) sont logés dans cette poutre 9 qui supporte en outre à l'avant, le support des moyens de rétraction des fils de sécurité largables, support dénommé chaise 10, dans la suite de la description. Enfin, elle guide un organe mécanique de commande générale dite « barre omnibus » dont la description et la fonction seront précisées ci-dessous, plus particulièrement au moyen de la figure 7. La chaise 10 est prolongée à l'avant par le support du générateur électrique 45 et les palliers de l'éolienne ainsi que le séquenceur électronique 41, le tout étant contenu à l'intérieur de la pointe 5 décrite au moyen de la figure 1. Le séquenceur électronique 41 délivre les ordres électriques nécessaires au déclenchement des diverses phases de la séquence. Le séquenceur 41 peut exécuter cette séquence selon une option courte ou une option longue. Le choix de cette option est effectué, comme décrit ci-dessous, par l'intermédiaire de la sécurité largable d'ogive (SLO). L'extrémité avant de la pointe est tronquée et laisse passer l'axe 12 de l'éolienne.

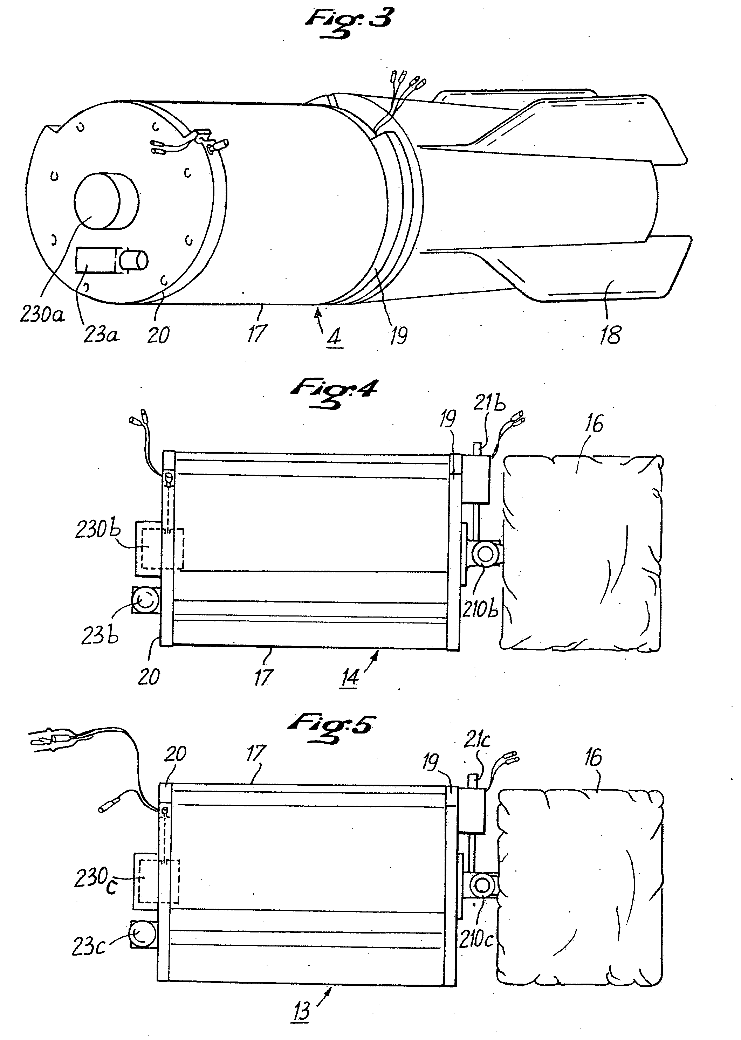

La poutre 9 est équipée de moyens d'accrochage et de verrouillage d'une pluralité de modules comprenant au moins un module avant 13 et un module arrière 4. Dans l'exemple décrit, un troisième module 14 intermédiaire est seulement prévu mais il pourrait s'agir en fait, d'un nombre plus élevé. Le module arrière 4 comprend un empennage 15 qui, avant largage de la bombe, sert d'empennage à celle-ci. Tous les modules comprennent un conteneur 16 de parachute (non visible sur la figure 3 correspondant au module arrière) et un corps 17 proprement dit, décrit ci-dessous. Il contient la charge qui, dans l'exemple décrit est une charge militaire. L'empennage 15 comporte des ailettes 18 pouvant se déployer, par exemple en alliage léger, dont l'ouverture conjuguée est commandée par un générateur pyrotechnique (non représenté). L'ensemble de l'empennage peut être orienté angulairement par rapport au module, donc par rapport à la bombe, de façon à s'adapter aux différentes configurations d'emport. Le conteneur de parachute tel que 16 est fixé sur le fond arrière 19 du module 4 et est disposé, dans ce cas entre les ailettes 18 de l'empennage 15 (il n'est pas visible sur la figure 3). Dans les autres cas ce parachute et son extracteur sont disposés entre le fond avant d'un module et le fond arrière du module suivant. Le corps des modules est constitué par des cylindres en acier, qui dans l'application décrite sont préfragmentés : il s'agit, par exemple, d'un usinage de la surface extérieure du cylindre créant sur toute cette surface un réseau de sillons réduisant localement l'épaisseur du corps et constituant ainsi des zones d'amorce de rupture telle que, lorsque la charge explosive contenue dans le corps est mise à feu, la pression disloque ce corps et le fragmente en un très grand nombre d'éclats de dimensions précises. Le corps est fermé hermétiquement par des moyens résistant à la pression, un fond arrière 19 (porte-empennage dans le cas du module arrière 4) et un fond avant 20. Des verrous de fixation référencés respectivement 21a, 21b, 21c pour chacun des modules (le verrou 21a correspondant au module arrière n'étant pas visible sur la figure 3) empêchent tout mouvement longitudinal des modules à l'intérieur de la virole 2. Leur escamotage, en revanche, libère le module qui peut alors être extrait comme cela sera expliqué ultérieurement. Ces verrous en s'escamotant neutralisent également les moyens qui retiennent le parachute plié : il s'agit par exemple, d'une partie du verrou usinée en forme de couteau (c) qui vient sectionner un moyen de maintien 210b, 210c (il s'agit d'une drisse que l'on coupe) du parachute dans son conteneur. Chaque fond avant 20 porte une fusée 230a, 230b, 230c et les attaches des suspentes d'un détecteur d'impact 23a, 23b, 23c piézoélectrique sur lequel est attaché de façon fragile (par un lien dont le point de rupture est calibré par exemple) comme on le verra au moyen de la figure 6, un parachute extracteur appartenant au module suivant. Dans le cas du module avant 13 qui n'est suivi d'aucun autre largage, ce lien, au lieu d'être relié à un parachute extracteur est relié à la chaise 10. Tous ces modules sont donc, rendus solidaires de la poutre 9 et verrouillés à celle-ci. Selon une caractéristique importante de l'invention, la barre omnibus comme cela sera expliqué ultérieurement, occupe deux positions : une première position dite de « sécurité » et une seconde position dite « armée ». Dans sa première position, elle interdit tout déverrouillage des éléments verrouillables, notamment celui des verrous qui bloquent le mouvement longitudinal des modules et leur extraction de la bombe. En revanche son passage dans la seconde position libère les différents systèmes de blocage et de verrouillage autorisant ainsi l'exécution de toutes les fonctions. De plus, compte tenu d'un agencement particulier des moyens d'accrochage 8 de la bombe au crochet du véhicule qui la transporte, le déplacement de la barre omnibus ne peut avoir lieu que si ces moyens d'accrochage sont effectivement libérés dudit crochet. Dans l'exemple décrit ces moyens d'accrochage sont constitués par des anneaux dont au moins un pivote (voir flèche F sur la figure 2) sous l'action de la barre omnibus qui recule de sa première vers sa seconde position. Si l'anneau n'est pas libéré du crochet, c'est-à-dire si la bombe est encore reliée à son véhicule porteur, la barre omnibus ne peut pas reculer car l'anneau ne peut pas tourner.

Le procédé de mise en œuvre de la bombe est décrit ci-dessous, au moyen des figures 6 et 7 qui représentent schématiquement les différentes séquences de largage de la bombe et de ses modules et les moyens permettant la mise en œuvre de ce largage.

La figure 6a représente la situation dans laquelle la bombe 1 est encore accrochée à l'aéronef 150. Son empennage 15 est en position rétractée et la barre omnibus 11 (voir figure 7) est en position dite de « sécurité ». Au cours de la séquence représentée sur la figure 6b, la séparation a eu lieu (comme le schématise la flèche 27). Dès cette séparation, comme cela sera expliqué ultérieurement, des moyens sont mis en œuvre (sécurités largables) pour escamoter un dispositif de verrouillage qui verrouillait la barre omnibus. Celle-ci se trouve libérée et passe de sa position de « sécurité » à sa position dite « armée ». A partir de ce moment tous les éléments de fixation deviennent déverrouillables. Notamment les verrous 21a, 21b, 21c de fixation de chacun des modules peuvent, sur ordre donné par le séquenceur électronique, s'escamoter, libérant le module concerné et simultanément comme cela a été dit précédemment, sectionner la drisse qui empêche l'ouverture du parachute principal correspondant. La figure 6c correspond à la séquence durant laquelle l'ordre d'ouverture de l'empennage 15 est donné avec solidarisation simultanée du parachute principal 30a avec le module arrière 4. La figure 6d, correspond à la séquence durant laquelle l'ordre de déverrouillage du module arrière 4 et de sortie du parachute extracteur 29a vient d'être donné par le séquenceur, le verrou 21a s'escamote, libérant ce module et permettant l'ouverture du parachute extracteur 29a provoquant ainsi l'ouverture du parachute principal à grande voiture 30a. Le détecteur 23a piézo-électrique relié par un lien fragile 24a au parachute extracteur 29b du module suivant 14 (module intermédiaire) l'extrait, avant que le lien fragile 24a (à point de rupture calibré) ne se rompe. La bombe est alors stabilisée aérodynamiquement par le parachute extracteur 29b qui fournit également, le moment venu (après cisaillement de la drisse qui empêche l'ouverture du parachute principal), l'effort nécessaire à la sortie du parachute principal. La séquence suivante représentée sur la figure 6e correspond à l'ordre de déverrouillage du verrou 21b du module intermédiaire 14 conduisant également au cisaillement de la drisse qui empêche l'ouverture du parachute principal 30b du module intermédiaire. Ce module s'est déjà éloigné de la bombe et le lien fragile 24b reliant le détecteur piézo-électrique 23b et le parachute extracteur 29c, du module avant 13 (le dernier dans l'exemple décrit) a été rompu. La figure 6f correspond à la séquence où le module avant 13 a été, à son tour, extrait de la bombe, grâce à l'ouverture de son parachute principal 30c selon la même technique décrite précédemment pour le module précédent.

La figure 7 est un schéma qui montre l'agencement des principaux moyens mis en œuvre pour assurer le largage par l'arrière, un à un et à la demande des différents modules selon les séquences déjà décrites au moyen de la figure précédente et comment ils coopèrent entre eux pour la réalisation de ces différentes séquences. Pendant le largage, les crochets du pylône du véhicule porteur libèrent les moyens d'accrochage de la bombe à son porteur. Dans la variante décrite, ces moyens sont constitués par les anneaux dont l'un 8, va, comme cela a déjà été décrit et conformément à l'une des caractéristiques de l'invention, être amené à jouer, outre sa fonction d'accrochage, une seconde fonction celle de palpeur de proximité du véhicule porteur. Dans le cas d'un largage inerte, les fils de sécurité largables sont libérés par le pylône sous un effort faible, insuffisant pour actionner le mécanisme décrit ci-dessous. Dans le cas d'un largage actif, le fil de sécurité largable de culot (SLC) est maintenu par le déclencheur du pylône et actionne le rétracteur 33 dont une variante de réalisation pratique est plus clairement schématisée dans la figure 7. Ce rétracteur est essentiellement constitué par un jeu de poulies mobiles 34 et un jeu de ressorts de compression 35. Le fil de la sécurité largable de culot SLC agit sur le jeu de poulies mobiles 34 qui comprime le jeu de ressorts de compression 35 jusqu'à une limite déterminée par une butée 36. De par son agencement, ce rétracteur est réarmable. Il s'ensuit la libération du moyen de verrouillage 28. Au bout d'une certaine course, ce moyen de verrouillage 28 libère la barre omnibus 11 qui recule sous l'action des ressorts 37 vers l'arrière, dans le sens indiqué par la flèche 38. Si le largage est réalisé en « instantané », le déclencheur du pylône maintient le fil de sécurité largable d'ogive SLO qui actionne un rétracteur 39 identique au précédent 33. Un commutateur électrique 40 impose au séquenceur électrique 41 la réalisation de la séquence courte. Toutefois, la position de ce commutateur 40 n'est définitive que si la barre omnibus 11 a été mise dans la position dite « armée », grâce à un moyen mécanique 110, sinon le commutateur 40 retombe en position « séquence longue ». En fin de course des rétracteurs, l'augmentation de la tension des fils de sécurité largables entraîne la rupture des liaisons à point de rupture calibrée 200 et 300 reliant les fils au déclencheur du pylône.

Comme le montre la figure 7, les sécurités largables SLO et SLC effectivement utilisées peuvent être choisies d'un côté ou de l'autre des moyens d'accrochage.

Selon une caractéristique essentielle de l'invention, lorsque la barre omnibus 11 a reculé et seulement dans ce cas elle entraîne en rotation l'anneau 8 grâce aux moyens de rotation 42. Cet anneau 8 joue alors le rôle d'un palpeur de proximité de la bombe et de son porteur. Il y a là combinaison entre la forme du moyen d'accrochage 8 de la bombe à son porteur, à savoir une forme d'anneau et le mouvement longitudinal de la barre omnibus 11. Si l'anneau 8 n'est pas libéré du crochet du pylône, la barre omnibus 11, même libérée de son moyen de verrouillage 28 et sollicitée par ses ressorts 37 ne pourra pas reculer. Or le mouvement de la barre omnibus 11 initialement en position de « sécurité » vers une position « armée », conditionne, comme il a été dit précédemment, et va encore être précisé ci-dessous, le déverrouillage notamment de tous les verrous de fixation (21). Il y a là deux actions indépendantes l'une de l'autre (ouverture du crochet d'une part, mouvement de la barre d'autre part) nécessaires pour que l'opération de largage et le fonctionnement de la bombe puissent intervenir. Ceci répond aux exigences des règlements de sécurité en vigueur dans ce domaine. Cette combinaison de moyens notamment l'agencement des rétracteurs coopérant avec la barre omnibus coopérant elle-même avec l'anneau tournant présente également l'avantage considérable de permettre à tout moment le test des mécanismes de sécurité. En effet, en cours de stockage ou avant utilisation, il est possible de vérifier le bon fonctionnement des sécurités. En effet, si la barre omnibus 11 est déplaçable de sa position de « sécurité » vers sa position dite « armée », elle l'est également dans l'autre sens. Une action sur l'anneau 8 permet le retour de la barre 11 de la position « armée » à la position de « sécurité ».

Lorsque cette barre omnibus 11 passe de la position de « sécurité » représentée sur la figure 7 à la position « armée », les logements 43a, 43b, 43c notamment viennent en regard des verrous correspondants 21a, 21b, 21c. Selon une autre caractéristique importante de l'invention, cette barre omnibus 11 libère du même coup, un certain nombre de moyens, les rendant alors aptes à obéir aux ordres qui leur seront donnés par le séquenceur électronique initialement programmé en fonction des conditions de largage choisies. Tout d'abord, en reculant, la barre omnibus libère l'éolienne 6 et actionne l'interrupteur 44 qui ferme le circuit électrique entre la dynamo 45 entraînée par l'éolienne 6 et le séquenceur électronique 41. Dès qu'il est alimenté, à l'instant $T_0$ celui-ci fonctionne. A l'instant $(T_0 + t_1)$ ($t_1$ étant égal par exemple à 0,4 seconde) le séquenceur 41 délivre l'ordre de mise à feu d'un générateur de pression pyrotechnique 46 fixé sur le fond arrière 19 du premier module 4. Celui-ci actionne les moyens de solidarisation 47 du parachute 30a du premier module 4 et pousse les verrous d'ouverture de l'empennage 15 (non représentés). Si par accident, la barre omnibus 11 n'a pas pu reculer, le générateur 46 débite dans l'atmosphère par l'intermédiaire de la soupape 49 qui est libre, et l'élément de solidarisation 47 du parachute 30a est immobilisé par la barre 11.

Dans le cas d'une séquence courte à l'instant $(T_0 + t_2)$ ($t_2$ étant supérieur à $t_1$, soit par exemple 0,5 seconde) le séquenceur 41 commande la mise à feu du générateur 60a du premier module 4. Le générateur pyrotechnique 60a fixé sur le fond arrière 19 du premier module 4, actionne à la fois le verrou 21a, et les moyens d'ouverture 61 du parachute extracteur 29a du module arrière 4. Si au moment du fonctionnement du générateur pyrotechnique 60a, la barre omnibus 11 n'a pas reculé, le verrou 21a ne peut se déplacer que d'une faible course suffisante pour interdire le recul ultérieur de la barre 11, mais insuffisante pour déverrouiller le module 4 et pour commander l'ouverture du parachute extracteur. Lorsque le verrou 21a, est effacé, le parachute extracteur 29a s'ouvre (figure 6c) et entraîne à sa suite la voilure du parachute principal 30a, qui, une fois ouvert, extrait le module arrière 4 de la virole 2 de la bombe 1 (figure 6d). Le module arrière 4 entraîne le détecteur 23a qui lui-même entraîne la voilure du parachute extracteur 29b du module intermédiaire 14 comme cela a été dit précédemment, par un lien 24a qui se détache du détecteur 23a lorsque sa tension atteint une valeur déterminée. Lorsque le module arrière 4 a été extrait de la virole 2, il est freiné énergiquement par son parachute 30a, et il suit une trajectoire à forte courbure de telle sorte que son axe soit proche de la verticale. A la fin d'un délai choisi en fonction de l'application, le dispositif à retard de la fusée 230a fonctionne. Le module 4 explose dès que le détecteur d'impact 23a, touche le sol. Pendant ce temps à l'instant $T_0 + t_2 + \Delta t$, le verrou 21b du module suivant 14 (module intermédiaire), a été actionné par le générateur pyrotechnique 60b, commandé par le séquenceur 41 et a simultanément libéré le module 14 et sectionné la drisse 210c qui empêchait l'ouverture du parachute principal 30b. Le séquenceur 41 donne cet ordre dans un délai de temps $\Delta t$ donné qui détermine la distance au sol devant séparer un éclatement d'un suivant. Le parachute principal 30b du module intermédiaire 14 peut alors se déployer et extraire ce module 14 de la virole de la bombe (figure 6e).

Une séquence analogue et les mêmes moyens mis en œuvre assurent l'extraction du module avant.

Sur la figure 7 on a représenté plus en détail, et à titre d'exemple, comment un verrou 21, en l'occurrence le verrou 21c correspondant au module avant 13, positionné dans le logement 43c par suite du déplacement vers l'arrière de la barre omnibus 11, se trouve à la fois déverrouillé par l'action du générateur pyrotechnique 60c agissant sur des moyens de déverrouillage 70 et sectionne grâce à la forme particulière en couteau (c) de l'une de ses extrémités, la drisse de retenu 210c du parachute principal attaché à ce module avant 13.

L'opération de largage est alors terminée.

Une bombe modulaire telle que décrite précédemment associe les qualités d'une bombe fragmentable capable d'exploser en produisant un nombre considérable d'éclats et ceci autant de fois que la bombe contient de modules. La sécurité introduite grâce à la barre omnibus en combinaison avec l'anneau d'accrochage pivotable et la souplesse de fonctionnement due notamment à l'agencement bout à bout à l'intérieur de la virole de ces modules, qui sont extraits un à un par l'arrière au moyen d'un parachute, font de cette bombe, une arme fiable et efficace utilisable notamment pour la neutralisation au sol d'objectifs étendus ou dispersés. L'agencement et la

mise en œuvre du procédé décrit à titre d'exemple pour une bombe modulaire contenant une pluralité de modules peut, comme cela a déjà été dit précédemment, s'appliquer, outre aux charges militaires, à des charges de type varié, telles que matériel sanitaire, vivre etc.

## Revendications

1. Dispositif de transport et de largage d'une pluralité de charges disposées en série dans un conteneur suspendu à un véhicule porteur, ce conteneur comprenant essentiellement : une virole centrale (2) munie d'anneaux d'accrochage (8) aux crochets correspondants du véhicule, une partie avant ogivale (5) et une partie arrière empennée (3), caractérisé en ce que les charges sont équipées de moyens d'extraction par l'arrière, comprenant un parachute à grande voilure (30) maintenu plié par une drisse sectionnable (210) et un parachute extracteur (29), et en ce qu'il comporte des moyens de commande et des moyens de sécurité de largage comprenant une poutre rigide (9) solidaire de la virole (2) du conteneur, cette poutre étant munie des anneaux d'accrochage (8), de verrous d'immobilisation (21) des charges et d'un moyen de déverrouillage (33) d'une barre coulissante (11) destinée à libérer les verrous d'immobilisation (21) et une éolienne (6) d'alimentation en énergie électrique.

2. Dispositif selon la revendication 1, caractérisé en ce que le parachute extracteur (29) de la charge suivante est relié au fond avant de la charge précédente au moyen d'un lien fragilisé (24) dont le point de rupture est calibré.

3. Dispositif selon la revendication 1, caractérisé en ce que le fond arrière (19) de la charge arrière (4) est constitué par le fond arrière compensé (3) du conteneur.

4. Dispositif selon l'une des revendications 1 à 3, caractérisé en ce que chacune des charges est immobilisée, avant largage, dans la virole (2), au moyen des verrous de fixation (21) disposés dans la poutre (9) du conteneur.

5. Dispositif selon la revendication 4, caractérisé en ce que les verrous de fixation (21) sont munis d'un couteau de cisaillement de la drisse (210) du parachute à grande voilure (30).

## Claims

1. A device for transporting and releasing a plurality of loads serially disposed in a container suspended to a carrier vehicle, said container comprising essentially : a central container body (2) provided with hooking rings (8) adapted to be hooked to corresponding hooks of said vehicle, an ogival front portion (5) and a rear portion (3) provided with an empennage, characterized in that said loads are provided with means for rearwardly extracting the same, including a large-surface parachute (30) maintained in the folded condition by a sectionable cord (210) and an extracting parachute (29), and in that it comprises load releasing control and safety means including a rigid beam (9) integral with said container body (2), said beam being provided with said hooking rings (8), locks (21) for immobilizing said loads, and means (33) for unlocking a slide bar (11) adapted to release the immobilizing locks (21) and an air motor (6) for producing electric energy.

2. A device according to claim 1, characterized in that the extracting parachute (29) of the succeeding load is connected to the front wall of the preceding load by a fracturable connecting element (24) the fracture point of which is calibrated.

3. A device according to claim 1, characterized in that the rear wall (19) of the rear load (4) is constituted by the compensated rear wall (3) of the container.

4. A device according to any one of claims 1 to 3, characterized in that each one of said loads, prior to being released, is immobilized in said container body (2) by fixing locks (21) mounted in the beam (9) of the container.

5. A device according to claim 4, characterized in that the fixing locks (21) are provided with a shearing knife adapted to sever said cord (210) of said large-surface parachute (30).

## Ansprüche

1. Vorrichtung zum Befördern und Abwerfen einer Mehrzahl von serienweise in einem an einem Träger-Beförderungsmittel aufgehängten Behälter angeordneten Lasten, wobei der Behälter wesentlich einen mit in entsprechende Haken des Beförderungsmittels einhakbaren Einhakringen (8) versehen Zentralmantel (2), einen vorderen spitzbogenförmigen Teil (5) und einen hinteren, mit einem Leitwerk versehenen Teil (3) aufweist, dadurch gekennzeichnet, dass die Lasten mit Mitteln zum rückwartigen Herausnehmen versehen sind, umfassend einen vermittels einer zerreissbaren Kordel (210) im gefalteten Zustand gehaltenen grossflächigen Fallschirm (30), sowie einen Ausziehfallschirm (29), und dass die Vorrichtung Abwurf-Steuer- und Sicherheitsmittel aufweist, welche einen mit dem Behältermantel (2) fest verbundenen steifen Träger (9) umfassen, der mit den Einhakringen (8), mit Verriegelungen (21) zum Festlegen der Lasten, sowie mit Mitteln (33) zum Entriegeln einer Gleitstange (11) versehen ist, welch letztere dazu bestimmt ist, die Festlegungsverriegelungen (21) und eine Windturbine (6) zur Bereitstellung elektrischer Energie freizusetzen.

2. Vorrichtung nach Anspruch 1, dadurch gekennzeichnet, dass der Ausziehfallschirm (29) der nachfolgenden Last mit dem vorderen Boden der vorhergehenden Last vermittels eines zerreissbaren Verbindungselementes (24) mit kalibrierter Sollbruchstelle verbunden ist.

3. Vorrichtung nach Anspruch 1, dadurch gekennzeichnet, dass der hintere Boden (19) der hinteren Last (4) durch den kompensierten hinteren Boden (19) des Behälters gebildet ist.

4. Vorrichtung nach einem der Ansprüche 1 bis 3, dadurch gekennzeichnet, dass jede Last vor dem Abwurf in dem Behältermantel (2) durch im Träger (9) des Behälters angeordnete Festlegverriegelungen (21) festgelegt ist.

5. Vorrichtung nach Anspruch 4, dadurch gekennzeichnet, dass die Festlegverriegelungen (21) mit einem Schermesser zum Durchschneiden der Kordel (21) des grossflächigen Fallschirms (30) ausgestattet sind.

Fig.1

Fig.2

*Fig. 3*

230a  23a  20  17  4  19  18

*Fig. 4*

19  21b  16

230b

23b

20  17  14

210b

*Fig. 5*

20  17  21c  19  16

230c

23c

210c

13

Fig.6

Fig.7